# EUROPÄISCHE PATENTSCHRIFT

(11) **EP 1 642 783 B1**
(45) Veröffentlichungstag und Bekanntmachung des Hinweises auf die Patenterteilung: **14.11.2007**
(21) Anmeldenummer: 05021019.4
(22) Anmeldetag: 27.09.2005
(51) Int. Cl.: B60R 21/16, B60R 21/276

(54) **Gassackmodul**
Airbag module
Module à coussin gonflable

(30) Priorität: 01.10.2004 DE 202004015294 U
(43) Veröffentlichungstag der Anmeldung: 05.04.2006
(73) Patentinhaber: TRW Automotive Safety Systems GmbH, 63743 Aschaffenburg (DE)
(72) Erfinder: Deckenhoff, Michael, 48249 Dülmen (DE); Schneider, Michael, Dr., 63834 Sulzbach (DE); Freudenberger, Klaus, 63743 Aschaffenburg (DE)
(74) Vertreter: Kitzhofer, Thomas

(56) Entgegenhaltungen:
- EP-A- 1 279 574
- US-A- 4 989 895

## Beschreibung

Die Erfindung betrifft ein Gassackmodul gemäß dem Oberbegriff des Anspruchs 1.

Für gewöhnlich soll bei einem Gassackmodul eines Fahrzeuginsassen-Rückhaltesystems der Gassack mit dem vom Gasgenerator erzeugten Gas möglichst schnell befüllt werden. In bestimmten Fällen ist es allerdings wünschenswert, den Gassack nicht mit dem gesamten verfügbaren Gasvolumen zu befüllen, oder, allgemeiner, Gas ausströmen zu lassen, weshalb im Gassackmodul Abströmöffnungen vorgesehen sind, durch deren Freigabe der Druck im Gassack begrenzt werden kann.

Es sind Gassackmodule bekannt, bei denen eine vorhandene Öffnung im Gassackgewebe zunächst durch eine Membrane verschlossen ist. Diese kann bei Bedarf entfernt oder zerstört werden, um die Abströmöffnung freizugeben.

Aus dem Stand der Technik sind ferner Gassackmodule bekannt, bei denen eine Abströmöffnung im Gehäuse in unmittelbarer Nähe des Gasgenerators angeordnet ist. Die Abströmöffnung ist im geschlossenen Zustand durch einen Schieber oder dergleichen verdeckt, der zur Freigabe der Öffnung verschoben werden kann, woraufhin das Gas nicht vollständig in den Gassack, sondern zum Teil durch die Abströmöffnung nach außen strömt. Solche Schieber werden magnetisch oder mit Hilfe einer Pyrotechnik bewegt und haben den Nachteil, daß sie eine Führung benötigen, die ein zusätzliches Bauteil und zudem eine zusätzliche Fehlerquelle darstellt. Auch sind derartige magnetische Ventile aufgrund des Aufbaus eines Magnetfelds oft vergleichsweise langsam.

Die EP 1 279 574 A1 beschreibt ein gattungsgemäßes Gassackmodul, bei dem mehrere Abströmöffnungen durch das Gewebe des Gassacks verschlossen werden. Um das Gassackgewebe in diesen Bereichen vor dem heißen Gas aus dem Gasgenerator zu schützen, sind im Modulinneren angeordnete Schieber vorgesehen, die die Abströmöffnungen zunächst bedecken. Werden die Schieber betätigt, so schmilzt das Gassackgewebe und gibt die Abströmöffnungen frei.

Aus der US 4 989 895 ist ein Gassackmodul bekannt, bei dem im Modulgehäuse vorgesehene Abströmöffnungen zunächst durch Glasplättchen verschlossen sind, die bei einem vorbestimmten Gassackinnendruck zerstört werden.

Darüber hinaus sind Module bekannt, bei denen das Modulgehäuse derart mit einer pyrotechnischen Vorrichtung wie einer Sprengschnur versehen ist, daß bei deren Aktivierung eine Öffnung im Gehäuse erzeugt wird, durch die Gas abströmen kann. Dazu sind allerdings große Kräfte erforderlich, und es können scharfe Kanten am Gehäuse entstehen.

Der Erfindung liegt daher die Aufgabe zugrunde, ein Gassackmodul mit einer Abströmöffnung bereitzustellen, die schnell und zuverlässig freigegeben werden kann.

Erfindungsgemäß ist das Gassackmodul mit einem Gassack, einem Gasgenerator, einem ersten und einem zweiten Befestigungsteil, zwischen denen ein Abschnitt des Gassacks befestigt ist, und einer Abströmöffnung zum Ableiten des vom Gasgenerator erzeugten und in den Gassack eingeleiteten Gases, die aus einem geschlossenen in einen geöffneten Zustand überführt werden kann, versehen. Ferner ist vorgesehen, daß die Abströmöffnung wenigstens eine Öffnung im ersten sowie im zweiten Befestigungsteil umfaßt, wobei sich im geschlossenen Zustand ein Abschnitt des Gassacks über die Abströmöffnung erstreckt und der Gassack im Bereich der Abströmöffnung zum Gassackinneren hin frei liegt. Es sind Mittel vorgesehen, die im Bereich der Abströmöffnung den Gassack abschnittsweise zerstören, um die Abströmöffnung freizulegen. Dabei sind die Mittel zum Freilegen der Abströmöffnung zusätzliche, vom Gasgenerator funktional getrennte Mittel. So ist es möglich, die Abströmöffnung völlig unabhängig vom Gasgenerator freizugeben, beispielsweise nach einer festgelegten Zeitspanne oder auf ein Sensorsignal hin. Die Freigabe der Abströmöffnung kann also zu einem frei wählbaren Zeitpunkt erfolgen, z.B. auch bereits vor der Generatorauslösung. Auf diese Weise wird ein stabiles System geschaffen, das schnell und zuverlässig betätigt werden kann, um eine Abströmöffnung in einem vom Insassen abgewandten Bereich des Modulgehäuses freizugeben. Da die Öffnungen in den Befestigungsteilen, bei denen es sich beispielsweise um einen Generatorträger und einen Gassackhalterahmen handeln kann, bereits vorhanden sind, muß lediglich ein Abschnitt des Gassacks geöffnet werden, was besonders einfach und mit vergleichsweise geringer Kraft erfolgen kann. Dabei kann aufgrund der definierten Lage der Abströmöffnung auf eine Ausrichtung von Gassack und Gehäuse zueinander verzichtet werden.

Vorzugsweise ist der Gassack über die Abströmöffnung gespannt, wodurch die Freigabe der Abströmöffnung wesentlich erleichtert wird. Bei genügend großer Spannung des Gassacks genügt es, diesen durch das Mittel zu perforieren, wobei der Gassack aufgrund seines Innendrucks nach dem Perforieren abrupt weiter aufreißt.

Gemäß einer bevorzugten Ausführungsform zerstören die Mittel zum Freilegen der Abströmöffnung den Gassack im wesentlichen längs einer offenen Kontur. Bei dieser Kontur kann es sich beispielsweise um eine U-förmige Linie oder eine offene Kreislinie handeln. Dadurch entsteht im Bereich der Abströmöffnung eine Klappe aus Gassackgewebe, die weiterhin fest mit dem Gassack verbunden ist und daher nicht die Gefahr birgt, möglicherweise zu einem frei fliegenden Gegenstand zu werden.

Vorteilhaft sind die Mittel zum Freilegen der Abströmöffnung zumindest teilweise entlang des Randes der Abströmöffnung angeordnet. Auf diese Weise ist sichergestellt, daß die maximale durch die vorhandenen Öffnungen vorgegebene Fläche als Abströmöffnung genutzt werden kann, um für eine rasche Druckminderung oder Verringerung des Druckanstiegs im Gassack zu sorgen.

Die Mittel zum Freilegen der Abströmöffnung können eine pyrotechnische Einheit umfassen. Dies gewährleistet ein schnelles Freigeben der Abströmöffnung ohne unerwünschte Verzögerungen. Zur Ansteuerung können ggf. freie oder freigewordene Kanäle einer als Steuergerät arbeitenden pyrotechnischen Einheit mit Ventilcharakter verwendet werden.

Gemäß einer bevorzugten Ausführungsform wird die pyrotechnische Einheit durch einen Zünder des Gasgenerators ausgelöst, wodurch Bauteile eingespart werden können.

Gemäß einer weiteren Ausführungsform wird die pyrotechnische Einheit durch einen separaten Zünder ausgelöst, was ein besonders flexibles Öffnen der Abströmöffnung ermöglicht.

Die Mittel zum Freilegen der Abströmöffnung können eine vorgespannte Antriebsfeder umfassen, die eine besonders kostengünstige und störungsunanfällige Ausgestaltung darstellt.

Vorteilhaft weisen die Mittel zum Freilegen der Abströmöffnung eine klappbare Schneidvorrichtung auf. So ergibt sich ein einfacher und zuverlässiger Mechanismus zum Freigeben der Abströmöffnung.

Vorzugsweise weisen die Mittel zum Freilegen der Abströmöffnung ein Rohr auf, das mit dem Zünder verbunden ist. So läßt sich der erforderliche Bauraum verkleinern und, insbesondere bei einem Rohr aus Kunststoff, die Masse des Öffnungsmechanismus stark reduzieren.

Gemäß einer bevorzugten Ausführungsform ist das Rohr mit pyrotechnischem Material gefüllt. Wiederum erhält man dadurch eine besonders schnell wirkende Freigabevorrichtung ohne Trägheit im System selbst.

Das Rohr kann mit mehreren Öffnungen versehen sein, durch die bei Betätigung des Zünders heißes Gas austritt und zum Gassack im Bereich der Abströmöffnung strömt, um ihn definiert zu zerstören. So ergibt sich eine besonders leichte und dennoch zuverlässige Anordnung ohne träge Teile.

Gemäß einer bevorzugten Ausführungsform weisen die Mittel zum Freilegen der Abströmöffnung eine Zünd- oder Sprengschnur auf, die vorteilhaft so nahe zum Gassackgewebe angeordnet ist, daß sie dieses unmittelbar zerstört. Die Zünd- oder Sprengschnur bildet eine schnell wirkende und zuverlässige Freigabevorrichtung, die zudem minimalen Bauraum erfordert.

Vorzugsweise ist die Zünd- oder Sprengschnur als Faden ausgebildet, der im geschlossenen Zustand der Abströmöffnung mindestens einmal durch das Gassackgewebe geführt ist. Dies gewährleistet neben einem sehr guten thermischen Kontakt insbesondere eine sichere Anbringung und Positionierung der Zünd- oder Sprengschnur am Gassack.

Weitere Merkmale und Vorteile der Erfindung ergeben sich aus der nachfolgenden Beschreibung mehrerer bevorzugter Ausführungsformen anhand der beigefügten Zeichnung. In dieser zeigt:
- Figur 1 eine Teilschnittansicht eines Gassackmoduls gemäß einer ersten Ausführungsform der Erfindung;
- Figur 2 eine vergrößerte Darstellung der Abströmöffnung des Gassackmoduls aus Figur 1 in einem geschlossenen Zustand;
- Figur 3 die Abströmöffnung aus Figur 2 im geöffneten Zustand;
- Figur 4 eine Draufsicht auf die geöffnete Abströmöffnung aus Figur 3;
- Figur 5 eine Perspektivansicht, teilweise im Schnitt, eines Gassackmoduls gemäß einer zweiten Ausführungsform der Erfindung;
- Figur 6 ein Mittel zum Freilegen der Abströmöffnung, das im Gassackmodul aus der Figur 5 zum Einsatz kommen kann;
- Figur 7 ein alternatives Mittel zum Freilegen der Abströmöffnung aus der Figur 5; und
- Figur 8 eine weitere Ausführungsform eines Mittels zum Freilegen der Abströmöffnung im Gassackmodul aus der Figur 5.

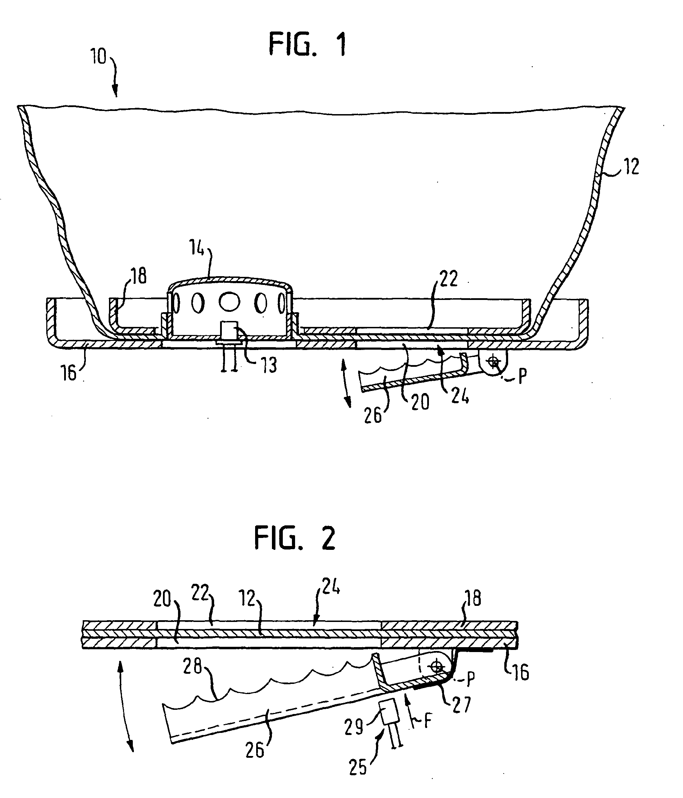

Ein in der Figur 1 ausschnittsweise gezeigtes Gassackmodul 10 weist einen Gassack 12, der im entfalteten Zustand gezeigt ist, und einen mit einem Zünder 13 versehenen Gasgenerator 14 auf. Ferner sind ein erstes Befestigungsteil in Form eines Generatorträgers 16 und ein zweites Befestigungsteil in Form eines im Gassackinneren liegenden Gassackhalterahmens 18 vorgesehen, zwischen denen ein Abschnitt des Gassacks 12 (Einblasmund) zum Zwecke der Befestigung eingeklemmt ist.

Im Generatorträger 16 ist eine Öffnung 20 vorgesehen, die im wesentlichen deckungsgleich mit einer Öffnung 22 im Halterahmen 18 ist. Diese beiden übereinander angeordneten Öffnungen 20 und 22 bilden eine Ausströmöffnung 24, die in dem in den Figuren 1 und 2 gezeigten Zustand durch einen Abschnitt des Gassacks 12 verschlossen wird. Dabei ist der Abschnitt des Gassacks 12 im Bereich der Abströmöffnung 24 gespannt und liegt zum Gassackinneren hin frei, wie am besten in Figur 2 zu sehen ist; es sind also keine zusätzlichen Teile, z.B. ein Schieber oder dergleichen, vorgesehen.

Unterhalb des Generatorträgers 16 ist eine klappbare Schneidvorrichtung 26 angeordnet, die in einem Punkt P schwenkbar mit dem Generatorträger 16 verbunden ist. Die Schneidvorrichtung 26 weist wenigstens eine Schneidkante 28 auf und ist ferner so ausgebildet und so im Bereich der Abströmöffnung 24 angeordnet, daß sie bei einer Betätigung den Gassack 12 im wesentlichen längs einer offenen Kontur in Form einer U-förmigen Linie entlang des Rands der Abströmöffnung 24 zerstören kann.

Die Schneidvorrichtung 26 bildet zusammen mit einem Antriebsmittel, bei dem es sich um eine pyrotechnische Einheit 25 oder eine vorgespannte Antriebsfeder 27 handeln kann, die Mittel zum Freilegen der Abströmöffnung 24. Im Falle, daß es sich bei dem Antriebsmittel um eine pyrotechnische Einheit 25 handelt, kann diese entweder durch den Zünder 13 des Gasgenerators 14 oder durch einen separaten Zünder 29 ausgelöst werden.

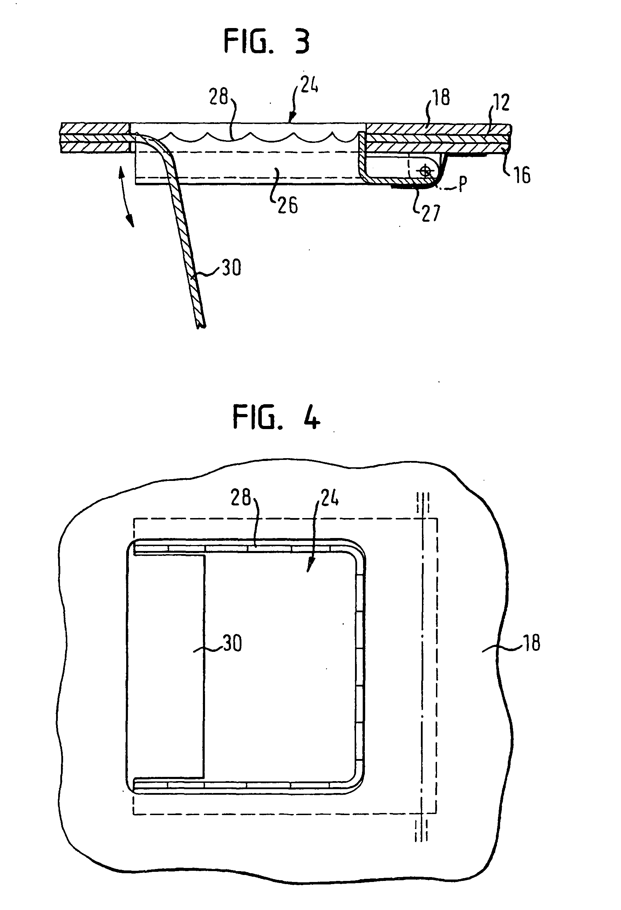

Tritt nun eine Situation ein, in der es wünschenswert erscheint, den Innendruck des ausgelösten Gassacks 12 zu reduzieren, wird das Antriebsmittel betätigt, das eine Kraft F auf die Schneidvorrichtung 26 ausübt (Figur 2). Dadurch wird die Schneidvorrichtung 26 um den Punkt P nach oben geschwenkt und schneidet das über die Abströmöffnung 24 gespannte Gassackgewebe entlang drei Seiten der in den Figuren rechteckig ausgebildeten Abströmöffnung 24 vollständig auf oder perforiert es zumindest, wobei im letzteren Fall das Gewebe aufgrund des Innendrucks des Gassacks 12 aufreißt und so die Abströmöffnung 24 freigibt. Dabei entsteht eine Klappe 30 aus Gassackgewebe, die weiterhin fest mit dem Gassack 12 verbunden ist, wie in den Figuren 3 und 4 gezeigt ist.

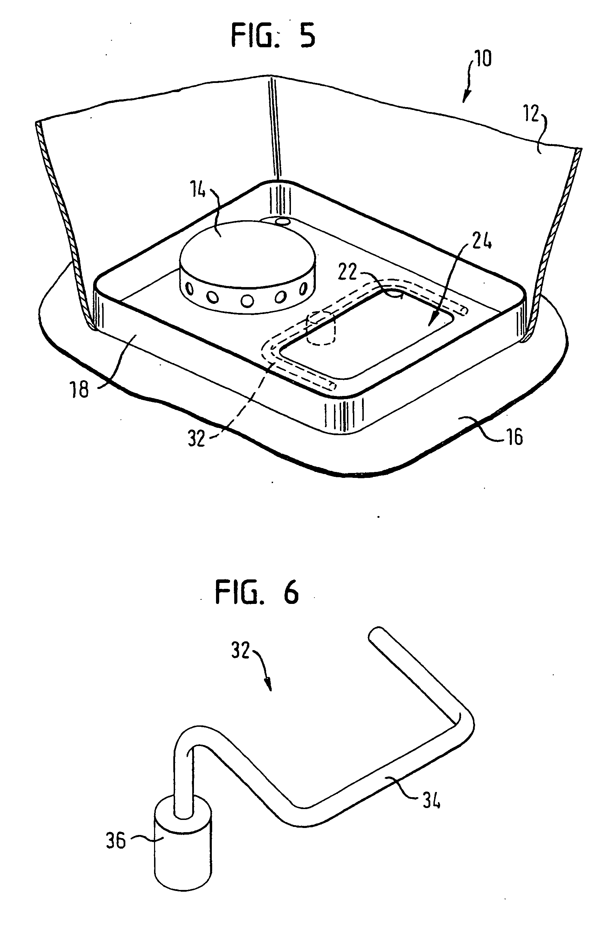

Figur 5 zeigt eine weitere Ausführungsform eines erfindungsgemäßen Gassackmoduls 10, wobei gleiche oder funktionsgleiche Teile gleiche Bezugszeichen tragen und im folgenden nur auf die Unterschiede zu der bereits beschriebenen Ausführungsform eingegangen wird.

Als Mittel zum Freilegen der Abströmöffnung 24 ist anstelle einer Schneidvorrichtung eine pyrotechnische Einheit 32 vorgesehen, die wiederum entlang des Rands der Abströmöffnung 24 unterhalb des Generatorträgers 16 angeordnet ist. Bei der pyrotechnischen Einheit 32 kann es sich um ein in Figur 6 gezeigtes, U-förmiges Kunststoffrohr 34 handeln, das mit pyrotechnischem Material gefüllt und mit einem Zünder 36 verbunden ist. Der Zünder 36 kann wiederum der Zünder des Gasgenerators 14 oder ein separater Zünder sein. Bei Betätigung des Zünders 36 kommt es zu einer Zerstörung des Kunststoffrohrs 34, die das unmittelbar über dem Rohr 34 angeordnete Gewebe des Gassacks 12 linienartig auftrennt und auf diese Weise die Abströmöffnung 24 freigibt. Dabei entsteht wiederum eine Klappe 30 aus Gassackgewebe, die nach unten wegklappt und weiterhin fest mit dem Gassack 12 verbunden ist.

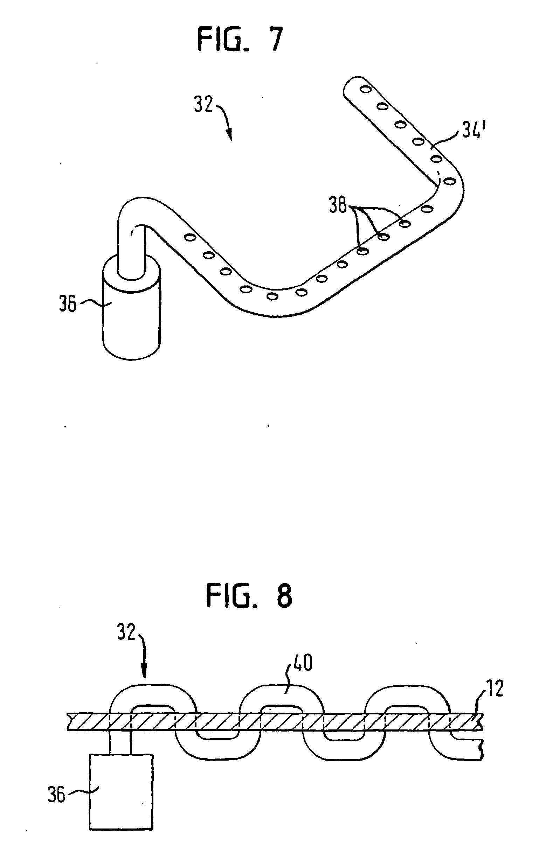

Figur 7 zeigt eine alternative Ausführungsform der pyrotechnischen Einheit 32, bei der es sich ebenfalls um ein U-förmiges Rohr 34' handelt, das mit einem Zünder 36 verbunden ist. Im Gegensatz zu der in Figur 6 gezeigten pyrotechnischen Einheit weist das Rohr 34' mehrere Öffnungen 38 auf und ist nicht mit pyrotechnischem Material gefüllt. Bei einer Aktivierung des Zünders 36 entsteht heißes Gas, das durch die Öffnungen 38 des Rohrs 34' strömt und das unmittelbar oberhalb des Rohrs 34' angeordnete Gassackgewebe entlang des Rands der Abströmöffnung 24 punktuell zerstört. Aufgrund des Innendrucks des Gassacks 12 reißt das Gassackgewebe im Bereich der linienartigen Perforation, und es entsteht eine fest mit dem Gassack 12 verbundene Klappe 30, die die Abströmöffnung 24 freigibt.

Figur 8 zeigt eine dritte Ausführungsform der U-förmigen pyrotechnischen Einheit 32 aus Figur 5. Dabei handelt es sich um eine pyrotechnische Zünd- oder Sprengschnur 40 in Form eines Fadens, die wiederum mit einem Zünder 36 verbunden ist. Die Sprengschnur 40 ist dabei im geschlossenen Zustand der Abströmöffnung 24 auf drei Seiten der Abströmöffnung 24 mehrmals durch das Gewebe des Gassacks 12 geführt. Auf diese Weise wird gewährleistet, daß die Sprengschnur so nahe am Gewebe des Gassacks 12 angeordnet ist, daß sie dieses beim Abbrennen nach der Betätigung des Zünders 36 unmittelbar zerstört und so die Abströmöffnung 24 freigibt.

## Patentansprüche

1. Gassackmodul mit
einem Gassack (12),
einem Gasgenerator (14),
einem ersten und einem zweiten Befestigungsteil, zwischen denen ein Abschnitt des Gassacks (12) befestigt ist, und
einer Abströmöffnung (24) zum Ableiten des vom Gasgenerator (14) erzeugten und in den Gassack (12) eingeleiteten Gases, die aus einem geschlossenen in einen geöffneten Zustand überführt werden kann und wenigstens eine Öffnung (20, 22) im ersten sowie im zweiten Befestigungsteil umfaßt,
wobei sich im geschlossenen Zustand ein Abschnitt des Gassacks (12) über die Abströmöffnung (24) erstreckt und der Gassack (12) im Bereich der Abströmöffnung (24) zum Gassackinneren hin frei liegt,
und wobei Mittel vorgesehen sind, die im Bereich der Abströmöffnung (24) den Gassack (12) abschnittsweise zerstören, um die Abströmöffnung (24) freizulegen,
**dadurch gekennzeichnet, daß** die Mittel zum Freilegen der Abströmöffnung (24) zusätzliche, vom Gasgenerator (14) funktional getrennte Mittel sind.

2. Gassackmodul nach Anspruch 1, **dadurch gekennzeichnet, daß** der Gassack (12) über die Abströmöffnung (24) gespannt ist.

3. Gassackmodul nach einem der vorhergehenden Ansprüche, **dadurch gekennzeichnet, daß** die Mittel zum Freilegen der Abströmöffnung (24) den Gassack (12) im wesentlichen längs einer offenen Kontur zerstören.

4. Gassackmodul nach einem der vorhergehenden Ansprüche, **dadurch gekennzeichnet, daß** die Mittel zum Freilegen der Abströmöffnung (24) zumindest teilweise entlang des Randes der Abströmöffnung (24) angeordnet sind.

5. Gassackmodul nach einem der vorhergehenden Ansprüche, **dadurch gekennzeichnet, daß** die Mittel zum Freilegen der Abströmöffnung (24) eine pyrotechnische Einheit (25; 32) umfassen.

6. Gassackmodul nach Anspruch 5, **dadurch gekennzeichnet, daß** die pyrotechnische Einheit (32) durch einen Zünder (13) des Gasgenerators (14) ausgelöst wird.

7. Gassackmodul nach Anspruch 5, **dadurch gekennzeichnet, daß** die pyrotechnische Einheit (32) durch einen separaten Zünder (29; 36) ausgelöst wird.

8. Gassackmodul nach einem der vorhergehenden Ansprüche, **dadurch gekennzeichnet, daß** die Mittel zum Freilegen der Abströmöffnung (24) eine vorgespannte Antriebsfeder (27) umfassen.

9. Gassackmodul nach einem der vorhergehenden Ansprüche, **dadurch gekennzeichnet, daß** die Mittel zum Freilegen der Abströmöffnung (24) eine klappbare Schneidvorrichtung (26) aufweisen.

10. Gassackmodul nach Anspruch 6 oder Anspruch 7, **dadurch gekennzeichnet, daß** die Mittel zum Freilegen der Abströmöffnung (24) ein Rohr (34; 34') aufweisen, das mit dem Zünder (36) verbunden ist.

11. Gassackmodul nach Anspruch 10, **dadurch gekennzeichnet, daß** das Rohr (34) mit pyrotechnischem Material gefüllt ist.

12. Gassackmodul nach Anspruch 10 oder 11, **dadurch gekennzeichnet, daß** das Rohr (34') mit mehreren Öffnungen (38) versehen ist, durch die bei Betätigung des Zünders (36) heißes Gas austritt und zum Gassack (12) im Bereich der Abströmöffnung (24) strömt, um ihn definiert zu zerstören.

13. Gassackmodul nach einem der vorhergehenden Ansprüche, **dadurch gekennzeichnet, daß** die Mittel zum Freilegen der Abströmöffnung eine Zünd- oder Sprengschnur (40) aufweisen.

14. Gassackmodul nach Anspruch 13, **dadurch gekennzeichnet, daß** die Zünd- oder Sprengschnur (40) so nahe zum Gassackgewebe angeordnet ist, daß sie dieses unmittelbar zerstört.

15. Gassackmodul nach Anspruch 14, **dadurch gekennzeichnet, daß** die Zünd- oder Sprengschnur (40) als Faden ausgebildet ist, der im geschlossenen Zustand der Abströmöffnung (24) mindestens einmal durch das Gassackgewebe geführt ist.

## Claims

1. A gas bag module comprising
a gas bag (12),
a gas generator (14),
first and second fastening pieces between which a section of the gas bag (12) is fastened, and
a discharge opening (24) for diverting the gas generated by the gas generator (14) and introduced into the gas bag (12), which can be transferred from a closed into an opened state and comprises at least one opening (20, 22) in the first and in the second fastening piece,
a section of the gas bag (12) extending over the discharge opening (24) in the closed state and the gas bag (12) being exposed in the region of the discharge opening (24) towards the interior of the gas bag,
and means being provided which destroy sections of the gas bag (12) in the region of the discharge opening (24), in order to expose the discharge opening (24),
**characterized in that** the means for exposing the discharge opening (24) are additional means functionally separated from the gas generator (14).

2. The gas bag module according to Claim 1, **characterized in that** the gas bag (12) is tensioned over the discharge opening (24).

3. The gas bag module according to any of the preceding claims, **characterized in that** the means for exposing the discharge opening (24) destroy the gas bag (12) substantially along an open contour.

4. The gas bag module according to any of the preceding claims, **characterized in that** the means for exposing the discharge opening (24) are arranged at least partially along the edge of the discharge opening (24).

5. The gas bag module according to any of the preceding claims, **characterized in that** the means for exposing the discharge opening (24) comprise a pyrotechnic unit (25; 32).

6. The gas bag module according to Claim 5, **characterized in that** the pyrotechnic unit (32) is triggered by an igniter (13) of the gas generator (14).

7. The gas bag module according to Claim 5, **characterized in that** the pyrotechnic unit (32) is triggered by a separate igniter (29; 36).

8. The gas bag module according to any of the preceding claims, **characterized in that** the means for exposing the discharge opening (24) comprise a pre-stressed drive spring (27).

9. The gas bag module according to any of the preceding claims, **characterized in that** the means for exposing the discharge opening (24) have a hinged cutting device (26).

10. The gas bag module according to Claim 6 or Claim 7, **characterized in that** the means for exposing the discharge opening (24) have a tube (34; 34') which is connected with the igniter (36).

11. The gas bag module according to Claim 10, **characterized in that** the tube (34) is filled with pyrotechnic material.

12. The gas bag module according to Claim 10 or 11, **characterized in that** the tube (34') is provided with several openings (38) through which, on actuation of the igniter (36), hot gas emerges and flows to the gas bag (12) in the region of the discharge opening (24), in order to destroy the gas bag (12) in a defined manner.

13. The gas bag module according to any of the preceding claims, **characterized in that** the means for exposing the discharge opening have an ignition cord or fuse (40).

14. The gas bag module according to Claim 13, **characterized in that** the ignition cord or fuse (40) is arranged so close to the gas bag fabric that it destroys the gas bag fabric directly.

15. The gas bag module according to Claim 14, **characterized in that** the ignition cord or fuse (40) is configured as a thread which in the closed state of the discharge opening (24) is guided at least once through the gas bag fabric.

## Revendications

1. Module de coussin à gaz comportant
un coussin à gaz (12),
un générateur de gaz (14),
une première partie de fixation et une deuxième partie de fixation entre lesquelles est fixé un tronçon du coussin à gaz (12), et
un orifice d'échappement (24) pour évacuer le gaz engendré par le générateur de gaz (14) et introduit dans le coussin à gaz (12), lequel peut être amené depuis un état fermé jusque dans un état ouvert et comprend au moins une ouverture (20, 22) dans la première partie de fixation ainsi que dans la deuxième partie de fixation,
dans lequel, à l'état fermé, un tronçon du coussin à gaz (12) s'étend sur l'orifice d'évacuation (24) et le coussin à gaz (12) est dégagé vers l'intérieur du coussin à gaz dans la zone de l'orifice d'échappement (24),
et dans lequel sont prévus des moyens qui, dans la zone de l'orifice d'échappement, détruisent le coussin à gaz (12) par tronçons pour dégager l'orifice d'échappement (24),
**caractérisé en ce que** les moyens pour dégager l'orifice d'échappement (24) sont des moyens additionnels séparés du générateur de gaz (14) du point de vue fonctionnel.

2. Module de coussin à gaz selon la revendication 1, **caractérisé en ce que** le coussin à gaz (12) est tendu via l'orifice d'échappement (24).

3. Module de coussin à gaz selon l'une des revendications précédentes, **caractérisé en ce que** les moyens de dégagement de l'orifice d'échappement (24) détruisent le coussin à gaz (12) sensiblement le long d'un contour ouvert.

4. Module de coussin à gaz selon l'une des revendications précédentes, **caractérisé en ce que** les moyens de dégagement de l'orifice d'échappement (24) sont agencés au moins partiellement le long du bord de l'orifice d'échappement (24).

5. Module de coussin à gaz selon l'une des revendications précédentes, **caractérisé en ce que** les moyens de dégagement de l'orifice d'échappement (24) comprennent une unité pyrotechnique (25 ; 32).

6. Module de coussin à gaz selon la revendication 5, **caractérisé en ce que** l'unité pyrotechnique (32) est déclenchée par un allumeur (13) du générateur de gaz (14).

7. Module de coussin à gaz selon la revendication 5, **caractérisé en ce que** l'unité pyrotechnique (32) est déclenchée par un allumeur (29 ; 36) séparé.

8. Module de coussin à gaz selon l'une des revendications précédentes, **caractérisé en ce que** les moyens de dégagement de l'orifice d'échappement (24) comprennent un ressort d'entraînement (27) précontraint.

9. Module de coussin à gaz selon l'une des revendications précédentes, **caractérisé en ce que** les moyens de dégagement de l'orifice d'échappement (24) présentent un dispositif de coupe (26) rabattable.

10. Module de coussin à gaz selon la revendication 6 ou la revendication 7, **caractérisé en ce que** les moyens de dégagement de l'orifice d'échappement (24) présentent un tube (34 ; 34') qui est relié à l'allumeur (36).

11. Module de coussin à gaz selon la revendication 10, **caractérisé en ce que** le tube (34) est rempli de matériau pyrotechnique.

12. Module de coussin à gaz selon la revendication 10 ou 11, **caractérisé en ce que** le tube (34') est pourvu de plusieurs ouvertures (38) à travers lesquels, lors de l'actionnement de l'allumeur (36), du gaz chaud sort et s'écoule vers le coussin à gaz (12) dans la zone de l'orifice d'échappement (24), pour le détruire de manière définie.

13. Module de coussin à gaz selon l'une des revendications précédentes, **caractérisé en ce que** les moyens de dégagement de l'orifice d'échappement présentent un cordeau d'allumage ou détonant. (40)

14. Module de coussin à gaz selon la revendication 13, **caractérisé en ce que** le cordeau d'allumage ou détonant (40) est agencé si proche du tissu de coussin à gaz qu'il détruit celui-ci directement.

15. Module de coussin à gaz selon la revendication 14, **caractérisé en ce que** le cordeau d'allumage ou détonant (40) est réalisé sous forme de fil qui, à l'état fermé de l'orifice d'échappement (24), est guidé au moins une fois à travers le tissu du coussin à gaz.
